# EUROPEAN PATENT APPLICATION

(11) **EP 0 658 683 A1**
(43) Date of publication of application: **21.06.1995**
(21) Application number: 93310225.3
(22) Date of filing: 17.12.1993
(51) Int. Cl.: E21B 23/04, E21B 33/04, E21B 17/07, F16F 9/49, F16F 9/342

(54) **Running tool**

(71) Applicant: Cooper Cameron Corporation, Houston, Texas 77027 (US)
(72) Inventor: Hobbs, Clifford Jack, Woodlesford Leeds LS26 8PQ (GB); Mosscrop, Guy, Oulton, Leeds LS26 8SX (GB); Kelly, Thomas G, Houston, Texas 77095 (US)
(74) Representative: Jackson, Peter Arthur

(57) **Abstract**

A running tool (17) is provided with a two stage piston (22,23) damper which makes a preliminary landing (16) at a wellhead to produce a throttled flow of oil and decelerate the tool before equipment carried by the tool makes a final landing (12).

## Description

In the operation of oil and gas wells, equipment is conventionally carried into the well on a running tool and landed in a tubular member, such as a spool or spool tree at or adjacent to the wellhead. Examples of equipment which are landed in this way are casing and tubing strings, suspended from a hanger. The string assembly may have a very large mass, and in order to avoid impact damage when the downward momentum is killed as the equipment is landed, the landing should be made at the minimum speed at which the running tool can be lowered. However, even at this speed high impact loads and pressures occur at the landing. Soft landing running tools are known, but these have involved the use of active devices which are inappropriate in many cases, such as the landing of a tubing string hanger in a spool tree.

In accordance with the present invention, a running tool has a body with means for carrying equipment to be landed down through a tubular member, the body having a peripheral portion which is movable along the body to vary the volume of a chamber which is, in use, filled with a liquid, and which has at least one throttled outlet, the arrangement being such that, when the running tool is lowered through the tubular member, before the equipment is finally landed, the peripheral portion is arranged to make a preliminary landing at the tubular member, whereupon further lowering of the running tool causes the peripheral portion to rise along the tool body and to displace liquid from the chamber through the outlet, thereby automatically decelerating the movement of the tool and cushioning the impact of the final landing of the equipment.

Preferably the outlet(s) is/are so arranged that the throttling effect increases as the peripheral part rises along the tool body.

With a running tool constructed in this way, initial impact loads within the tool are minimised and as the tool is decelerated, the throttling effect, and hence resistance to further downward movement increases until the carried equipment makes a soft landing. As a result, component strength need not be so high as conventionally and the running tool can be used to instal equipment in a wider weather window as, in marine operations, the system becomes less heave dependent.

In practice, the, or at least one of the, throttled outlets may be provided by a shuttle of variable cross-section which is movable through an opening in the wall of the chamber to vary the effective cross-section of the opening.

The peripheral portion may be a cylinder having radially inwardly projecting annular end walls sealed to and slidable relatively to the tool body, one on each axial side of a fixed annular piston projecting radially outwardly from the tool body, the chamber being provided within the cylinder between the piston and the lower end wall of the cylinder. In that case the shuttle may work in a hole through the piston and be movable between a lowermost position relatively to the piston, in which there is a maximum flow path through the opening, and in which it is held by initial engagement with the upper end wall of the cylinder, the shuttle being allowed to rise through the opening to reduce the flow path through the opening by the liquid pressure within the cylinder chamber as the cylinder rises along the tool body and the upper end wall of the cylinder moves away from the piston.

A two stage cushioning can then be provided if the shuttle moves to its uppermost position relatively to the piston during a first part of the upward movement of the cylinder along the tool body, whereafter a substantially constant throttling is provided by an outlet or outlets, such as bleed holes through the annular piston, from the chamber.

An example of a running tool constructed in accordance with the present invention is illustrated in the accompanying drawings, in which:
Fig. 1 is a vertical axial section showing the running tool landing a tubing hanger in a spool tree;
Fig. 2 is a vertical axial section of the running tool;
Fig. 3 is a diagram showing the variable cross-section of a shuttle;
Fig. 4 is a plan of a piston of the running tool; and,
Fig. 5 is a section taken on the line V - V in Fig. 4.

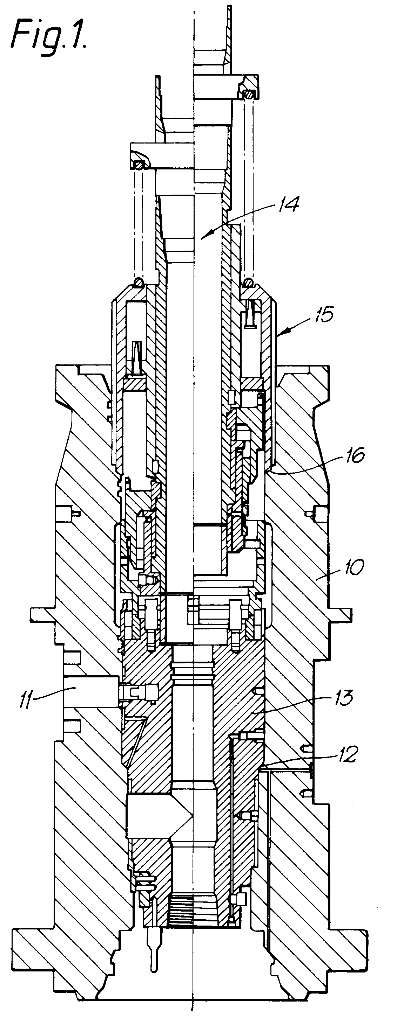

As shown in Figure 1, a spool tree 10, mounted on a wellhead (not shown) and having lateral outlet ports 11, of which one is shown, for production fluid.

Shown landed on a bowl 12 within the spool tree is a tubing hanger 13 to the bottom of which a tubing string (not shown) is attached and extends down into the well. The tubing string assembly has been landed in the spool tree by means of a running tool 14 having a cushioning assembly 15 which is shown in more detail in the other Figures, and which has made a landing on a bowl 16 within the spool tree.

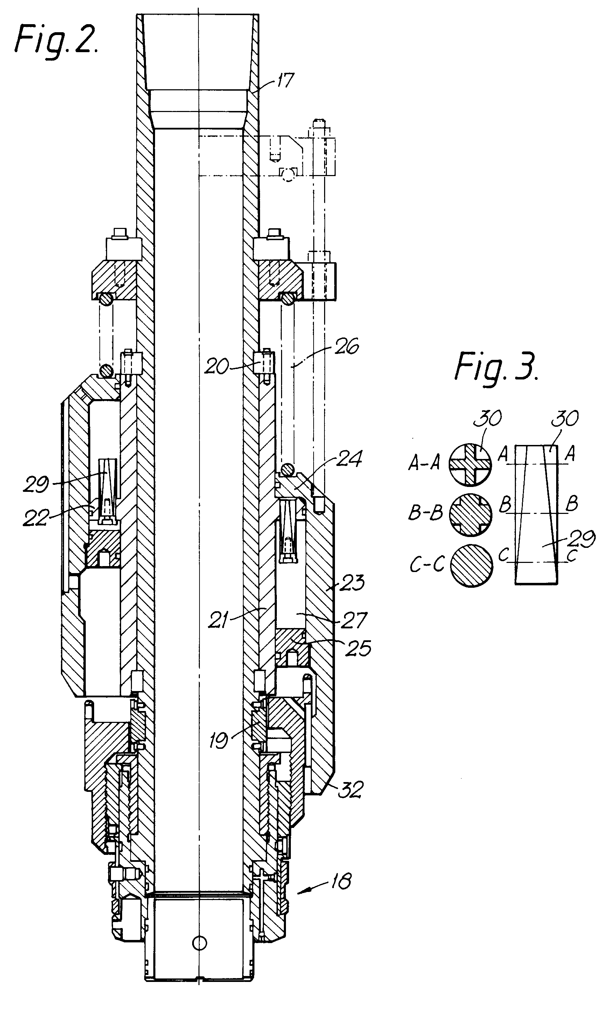

The running tool has a conventional tubular mandrel 17 which is latched at its lower end to the tubing hanger 13 by conventional latching equipment 18. Fixed around the mandrel 17 by means of split rings 19 and 20 is a sleeve 21 carrying a radially outwardly projecting annular piston 22. Surrounding the sleeve 21 is a cylinder 23 having radially inwardly extending upper and lower annular end walls 24 and 25, the upper end wall being integrally formed and the lower end wall being an annular screw in ring. Both the upper and lower walls 24,25 are slidable along, and sealed to, the sleeve 21, and the periphery of the piston 22 is slidable relatively to, and sealed against, the inner wall of the cylinder 23. The cylinder 23 is urged to the lowermost position shown on the right hand side of Figure 2 by a helically coiled compression spring 26, the downward movement of the cylinder being limited by the abutment of the upper wall 24 with the piston 22. The sleeve 21, cylinder 23, wall 25 and piston 22 define between them a chamber 27 of variable volume as the cylinder 23 slides relatively to the sleeve 21 and running tool mandrel 17.

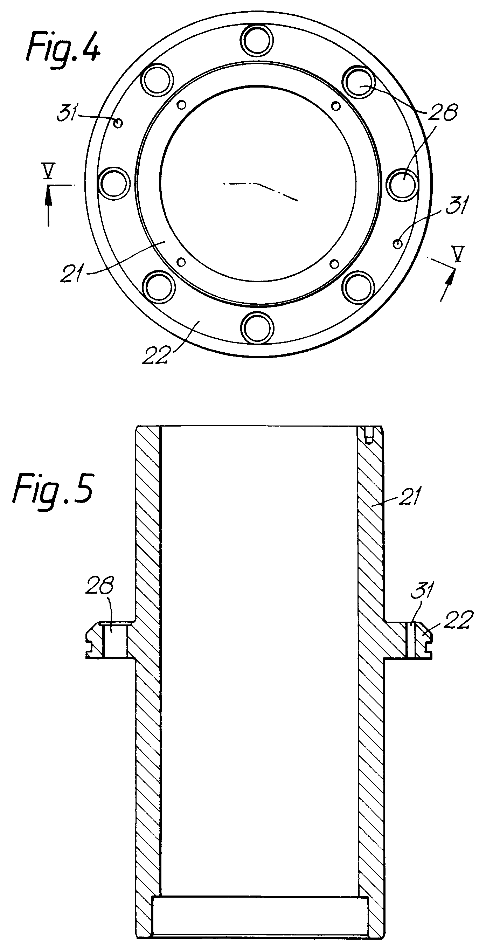

As shown in Figure 4, the piston 22 is provided with an equiangularly spaced ring of eight openings 28 in each of which there is slidably captive a shuttle 29. As shown in Figure 3, the shuttle is formed with four peripheral axially extending grooves 30 of diminishing depth from its upper end, the grooves vanishing above the lower end of the shuttle. The piston 22 is also formed with two bleed holes 31.

When the equipment is to be run-in attached to the lower end of the running tool, the cylinder 23 is held by the spring 26 in the lowermost position shown on the right hand side of Figure 2 with the chamber 27 filled with oil and the shuttles all being held in their lowermost position within their respective openings 28 by engagement with the upper wall 24. As the equipment is progressively lowered through the spool tree, a chamfered lower end surface 32 engages the landing 16 in the spool tree 10 while the landing shoulder of the tubing hanger is still spaced above the landing 12. Consequently, upon further downward movement of the running tool, the cylinder 23 is forced upwardly relatively to the sleeve 21 and mandrel 17 so that oil in the chamber 27 is forced out through the openings 28 into the chamber then appearing above the piston 22. Initially the openings 28 are occupied by the minimum cross-section upper ends of the shuttles 29, but as the cylinder 23 continues to rise upon further lowering of the running tool and equipment, the shuttles are forced, under the fluid pressure in the chamber 27 to rise up through the openings 28 thereby constricting the passage through the openings past the shuttles because of the increasing cross-section of the shuttles. This upward movement of the shuttles is allowed by the continuing movement of the end wall 24 upwardly from the piston 22 but after a stroke of the order of 50 mm, the shuttles are in their fully raised position as shown on the left hand side of Figure 2, in which their full cross-sectional lower ends close the openings 28. Thereafter the only outlet for the oil from the chamber 27 is through the two bleed holes 29 in the piston 22. The effect therefore is that the resistance to downward movement of the running tool and equipment, corresponding to the throttling of the oil leaving the chamber 27 first increases steadily as the shuttles move up through the openings 28, and then levels off to a substantially constant value for the final landing of the tubing hanger on its landing 12. At this time the cylinder 23 will have risen to the position shown on the left hand side of Figure 2, in which the wall 25 is closely spaced below the piston 22. Subsequently the running tool will be unlatched from the tubing hanger and removed for completion of the well.

## Claims

1. A running tool having a body (17) with means (18) for carrying equipment to be landed down through a tubular member (10), the body having a peripheral portion (23) which is movable along the body to vary the volume of a chamber (27) which is, in use, filled with a liquid, and which has at least one throttled outlet (28,31), the arrangement being such that, when the running tool is lowered through the tubular member, before the equipment is finally landed, the peripheral portion is arranged to make a preliminary landing (16) at the tubular member, whereupon further lowering of the running tool causes the peripheral portion to rise along the tool body and to displace liquid from the chamber through the outlet, thereby automatically decelerating the movement of the tool and cushioning the impact of the final landing (12) of the equipment.

2. A running tool according to claim 1, wherein the outlet(s) (28) is/are so arranged that the throttling effect increases as the peripheral part (23) rises along the tool body (17).

3. A running tool according to claim 2, wherein the, or at least one of, the throttled outlets is provided by a shuttle (29) of variable cross-section which is movable through an opening (28) in the wall of the chamber (27) to vary the effective cross-section of the opening.

4. A running tool according to any one of the preceding claims, wherein the peripheral portion is a cylinder (23) having radially inwardly projecting annular end walls (24,25) sealed to and slidable relatively to the tool body (21), one on each axial side of a fixed annular piston (22) projecting radially outwardly from the tool body, the chamber (27) being provided within the cylinder between the piston and the lower end wall of the cylinder.

5. A running tool according to claims 3 and 4, wherein the shuttle (29) works in a hole (28) through the piston and is movable between a lowermost position relatively to the piston, in which there is a maximum flow path through the opening, and by which it is held by initial engagement with the upper end wall (24) of the cylinder, the shuttle being allowed to rise through the opening to reduce the flow path through the opening (28) by the liquid pressure within the cylinder chamber (27) as the cylinder rises along the tool body and the upper end wall (24) of the cylinder moves away from the piston.

6. A running tool according to claim 5, wherein the shuttle (29) moves to its uppermost position relatively to the piston (22) during a first part of the upward movement of the cylinder along the tool body, whereafter a substantially constant throttling is provided by the outlet(s) (31) from the chamber.

7. A running tool according to any one of claims 4 to 6, wherein the cylinder (23) is urged to its lowermost position relatively to the tool body by a spring (26).
